# EUROPEAN PATENT APPLICATION

(11) **EP 4 443 991 A1**
(43) Date of publication of application: **09.10.2024**
(21) Application number: 24153026.0
(22) Date of filing: 22.01.2024
(51) Int. Cl.: H04W 56/00, H04B 7/185

(54) **DETERMINING ROUND TRIP TIME IN NTN**

(30) Priority: 06.04.2023 FI 20235399
(71) Applicant: Nokia Technologies Oy, 02610 Espoo (FI)
(72) Inventor: WIGARD, Jeroen, Klarup (DK); JUAN, Enric, Aalborg (DK); FREDERIKSEN, Frank, Klarup (DK); MEDEIROS DE AMORIM, Rafhael, Aalborg (DK)
(74) Representative: Nokia EPO representatives

(57) **Abstract**

There is provided a method performed by a user equipment configured to operate in a non-terrestrial network, the method comprising: acquiring a scheduling offset value for communication between the apparatus and a first network node; determining a time difference between a reception of a downlink message and transmission of an uplink message, wherein the uplink message is transmitted in response to the downlink message; determining a time domain value based on the determined time difference and the acquired scheduling offset; and reporting the time domain value to a second network entity.

## Description

### TECHNICAL FIELD

Various example embodiments relate generally to non-terrestrial network (NTN), and to determining timing related aspects, such as round trip time (RTT).

### BACKGROUND

It is important for the communicating parties to use appropriate timing for communications, in particular for NTN, which is prone to propagation delays. Determining timing may include determining parameters such as timing advance (TA), round trip time (RTT), and scheduling offset, for example.

### BRIEF DESCRIPTION

According to some aspects, there is provided the subject matter of the independent claims. Some further aspects are defined in the dependent claims.

### LIST OF THE DRAWINGS

In the following, the invention will be described in greater detail with reference to the embodiments and the accompanying drawings, in which
Figure 1 presents a network, according to an embodiment;
Figure 2 shows an example of non-terrestrial network, NTN;
Figures 3A to 3C show timing related aspects;
Figure 4A illustrates use of K_offset in NTN, according to an embodiment;
Figure 4B, 5A and 5B illustrate determination of a time domain value, according to some embodiments;
Figures 6 and 7 show methods, according to some embodiments;
Figure 8 show a signaling flow diagram, according to an embodiment; and
Figures 9 and 10 illustrate apparatuses, according to some embodiments.

### DESCRIPTION OF EMBODIMENTS

The following embodiments are exemplary. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments. For the purposes of the present disclosure, the phrases "at least one of A or B", "at least one of A and B", "A and/or B" means (A), (B), or (A and B). For the purposes of the present disclosure, the phrases "A or B" and "A and/or B" means (A), (B), or (A and B). For the purposes of the present disclosure, the phrase "A, B, and/or C" means (A), (B), (C), (A and B), (A and C), (B and C), or (A, B, and C).

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments.

Embodiments described may be implemented in a radio system, such as one comprising at least one of the following radio access technologies (RATs): Worldwide Interoperability for Micro-wave Access (WiMAX), Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, and enhanced LTE (eLTE). Term `eLTE' here denotes the LTE evolution that connects to a 5G core. LTE is also known as evolved UMTS terrestrial radio access (EUTRA) or as evolved UMTS terrestrial radio access network (EUTRAN). A term "resource" may refer to radio resources, such as a physical resource block (PRB), a radio frame, a subframe, a time slot, a subband, a frequency region, a sub-carrier, a beam, etc. The term "transmission" and/or "reception" may refer to wirelessly transmitting and/or receiving via a wireless propagation channel on radio resources

The embodiments are not, however, restricted to the systems/RATs given as an example but a person skilled in the art may apply the solution to other communication systems provided with necessary properties. One example of a suitable communications system is the 5G system. The 3GPP solution to 5G is referred to as New Radio (NR). 5G has been envisaged to use multiple-input-multiple-output (MIMO) multi-antenna transmission techniques, more base stations or nodes than the current network deployments of LTE (a so-called small cell concept), including macro sites operating in co-operation with smaller local area access nodes and perhaps also employing a variety of radio technologies for better coverage and enhanced data rates. 5G will likely be comprised of more than one radio access technology / radio access network (RAT/RAN), each optimized for certain use cases and/or spectrum. 5G mobile communications may have a wider range of use cases and related applications including video streaming, augmented reality, different ways of data sharing and various forms of machine type applications, including vehicular safety, different sensors and real-time control. 5G is expected to have multiple radio interfaces, namely below 6GHz, cmWave and mmWave, and being integrable with existing legacy radio access technologies, such as the LTE.

The current architecture in LTE networks is distributed in the radio and centralized in the core network. The low latency applications and services in 5G may require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications). Edge cloud may be brought into RAN by utilizing network function virtualization (NVF) and software defined networking (SDN). Using edge cloud may mean access node operations to be carried out, at least partly, in a server, host or node operationally coupled to a remote radio head or base station comprising radio parts. Network slicing allows multiple virtual networks to be created on top of a common shared physical infrastructure. The virtual networks are then customised to meet the specific needs of applications, services, devices, customers or operators.

In radio communications, node operations may in be carried out, at least partly, in a central/centralized unit, CU, (e.g. server, host or node) operationally coupled to distributed unit, DU, (e.g. a radio head/node). It is also possible that node operations will be distributed among a plurality of servers, nodes or hosts. It should also be understood that the distribution of work between core network operations and base station operations may vary depending on implementation. Thus, 5G networks architecture may be based on a so-called CU-DU split. One gNB-CU controls several gNB-DUs. The term 'gNB' may correspond in 5G to the eNB in LTE. The gNBs (one or more) may communicate with one or more UEs. The gNB-CU (central node) may control a plurality of spatially separated gNB-DUs, acting at least as transmit/receive (Tx/Rx) nodes. In some embodiments, however, the gNB-DUs (also called DU) may comprise e.g. a radio link control (RLC), medium access control (MAC) layer and a physical (PHY) layer, whereas the gNB-CU (also called a CU) may comprise the layers above RLC layer, such as a packet data convergence protocol (PDCP) layer, a radio resource control (RRC) and an internet protocol (IP) layers. Other functional splits are possible too. It is considered that skilled person is familiar with the OSI model and the functionalities within each layer.

In an embodiment, the server or CU may generate a virtual network through which the server communicates with the radio node. In general, virtual networking may involve a process of combining hardware and software network resources and network functionality into a single, software-based administrative entity, a virtual network. Such virtual network may provide flexible distribution of operations between the server and the radio head/node. In practice, any digital signal processing task may be performed in either the CU or the DU and the boundary where the responsibility is shifted between the CU and the DU may be selected according to implementation.

Some other technology advancements probably to be used are Software-Defined Networking (SDN), Big Data, and all-IP, to mention only a few non-limiting examples. For example, network slicing may be a form of virtual network architecture using the same principles behind software defined networking (SDN) and network functions virtualisation (NFV) in fixed networks. SDN and NFV may deliver greater network flexibility by allowing traditional network architectures to be partitioned into virtual elements that can be linked (also through software). Network slicing allows multiple virtual networks to be created on top of a common shared physical infrastructure. The virtual networks are then customised to meet the specific needs of applications, services, devices, customers or operators.

The plurality of gNBs (access points/nodes), each comprising the CU and one or more DUs, may be connected to each other via the Xn interface over which the gNBs may negotiate. The gNBs may also be connected over next generation (NG) interfaces to a 5G core network (5GC), which may be a 5G equivalent for the core network of LTE. Such 5G CU-DU split architecture may be implemented using cloud/server so that the CU having higher layers locates in the cloud and the DU is closer to or comprises actual radio and antenna unit. There are similar plans ongoing for LTE/LTE-A/eLTE as well. When both eLTE and 5G will use similar architecture in a same cloud hardware (HW), the next step may be to combine software (SW) so that one common SW controls both radio access networks/technologies (RAN/RAT). This may allow then new ways to control radio resources of both RANs. Furthermore, it may be possible to have configurations where the full protocol stack is controlled by the same HW and handled by the same radio unit as the CU.

It should also be understood that the distribution of labour between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite in the mega-constellation may cover several satellite-enabled network entities that create on-ground cells. The on-ground cells may be created through an on-ground relay node or by a gNB located on-ground or in a satellite.

The embodiments may be also applicable to narrow-band (NB) Internet-of-things (IoT) systems which may enable a wide range of devices and services to be connected using cellular telecommunications bands. NB-IoT is a narrowband radio technology designed for the Internet of Things (IoT) and is one of technologies standardized by the 3rd Generation Partnership Project (3GPP). Other 3GPP IoT technologies also suitable to implement the embodiments include machine type communication (MTC) and eMTC (enhanced Machine-Type Communication). NB-IoT focuses specifically on low cost, long battery life, and enabling a large number of connected devices. The NB-IoT technology is deployed "in-band" in spectrum allocated to Long Term Evolution (LTE) - using resource blocks within a normal LTE carrier, or in the unused resource blocks within a LTE carrier's guard-band - or "standalone" for deployments in dedicated spectrum.

The embodiments may be also applicable to device-to-device (D2D), machine-to-machine, peer-to-peer (P2P) communications. The embodiments may be also applicable to vehicle-to-vehicle (V2V), vehicle-to-infrastructure (V2I), infrastructure-to-vehicle (I2V), or in general to V2X or X2V communications.

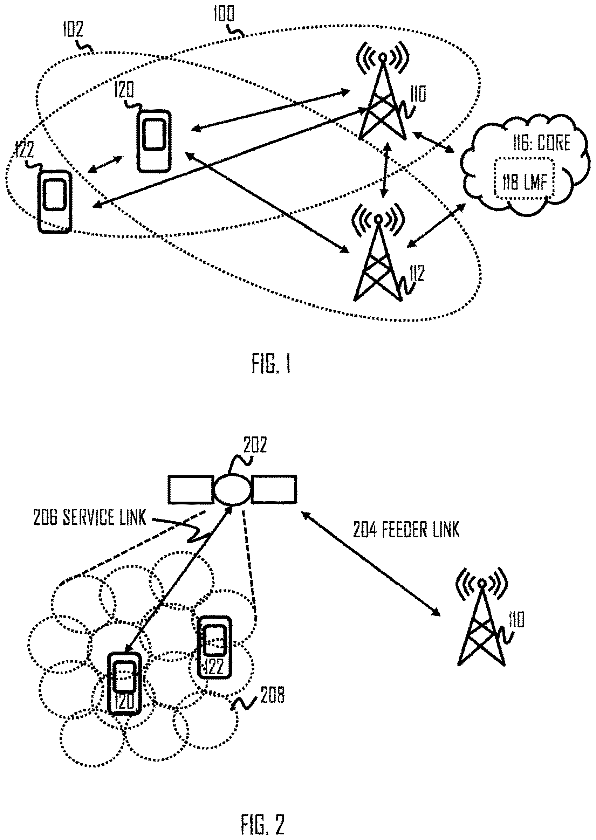

Figure 1 illustrates an example of a communication system to which embodiments of the invention may be applied. The system may comprise a control node 110 providing one or more cells, such as cell 100, and a control node 112 providing one or more other cells, such as cell 102. Each cell may be, e.g., a macro cell, a micro cell, femto, or a pico cell, for example. In another point of view, the cell may define a coverage area or a service area of the corresponding access node. The control node 110, 112 may be an evolved Node B (eNB) as in the LTE and LTE-A, ng-eNB as in eLTE, gNB of 5G, or any other apparatus capable of controlling radio communication and managing radio resources within a cell. The control node 110, 112 may be called a base station, network node, or an access node.

The system may be a cellular communication system composed of a radio access network of access nodes, each controlling a respective cell or cells. The access node 110 may provide user equipment (UE) 120 (one or more UEs) with wireless access to other networks such as the Internet. The wireless access may comprise downlink (DL) communication from the control node to the UE 120 and uplink (UL) communication from the UE 120 to the control node.

Additionally, although not shown, one or more local area access nodes may be arranged such that a cell provided by the local area access node at least partially overlaps the cell of the access node 110 and/or 112. The local area access node may provide wireless access within a sub-cell. Examples of the sub-cell may include a micro, pico and/or femto cell. Typically, the sub-cell provides a hot spot within a macro cell. The operation of the local area access node may be controlled by an access node under whose control area the sub-cell is provided. In general, the control node for the small cell may be likewise called a base station, network node, or an access node.

There may be a plurality of UEs 120, 122 in the system. Each of them may be served by the same or by different control nodes 110, 112. The UEs 120, 122 may communicate with each other, in case D2D communication interface is established between them.

The term "terminal device" or "UE" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

In the case of multiple access nodes in the communication network, the access nodes may be connected to each other with an interface. LTE specifications call such an interface as X2 interface. For IEEE 802.11 network (i.e. wireless local area network, WLAN, WiFi), a similar interface may be provided between access points. An interface between an LTE access point and a 5G access point, or between two 5G access points may be called Xn. Other communication methods between the access nodes may also be possible. The access nodes 110 and 112 may be further connected via another interface to a core network 116 of the cellular communication system. The LTE specifications specify the core network as an evolved packet core (EPC), and the core network may comprise e.g. a mobility management entity (MME) and a gateway node. The MME may handle mobility of terminal devices in a tracking area encompassing a plurality of cells and handle signalling connections between the terminal devices and the core network. The gateway node may handle data routing in the core network and to/from the terminal devices. The 5G specifications specify the core network as a 5G core (5GC), and there the core network may comprise e.g. an access and mobility management function (AMF), a user plane function/gateway (UPF), a location management function (LMF) 118, to mention only a few. The AMF may handle termination of non-access stratum (NAS) signalling, NAS ciphering & integrity protection, registration management, connection management, mobility management, access authentication and authorization, security context management. The UPF node may support packet routing & forwarding, packet inspection and QoS handling, for example. LMF 118 may be responsible of location determination of the UE, for example.

The feasibility of using 5G NR standards to support non-terrestrial networks (NTN) has been studied during 3GPP releases 15 and 16. UEs supporting NTN are assumed to have GNSS capability. In an NTN system, 5G base stations (gNB) may be deployed on board satellites to provide communication coverage over a very large area that may be otherwise unreachable by cellular networks. It can be used to connect IoT devices globally as well as provide personal communication in remote areas and in disaster relief, for example.

Figure 2 shows an example NTN scenario. NTN targets at enabling communication even when satellites 202 are moving at high speeds (7500 m/s at low earth orbit) and potentially having extremely long round trip times. For the Rel-17 work, the general assumption was that the satellites 202 used for the communication would be operating in "transparent mode", meaning that the satellites 202 would be seen as mobile remote radio heads, while the normal 5G base station 200 would be located on earth. For this scenario the communication link between the gNB (e.g. modified gNB 110) and the UE 120/122 would be divided into two radio links. The feeder link 204 (between the gNB and the satellite) and the service link 206 (between the satellite and the UE).

One of the main challenges in the communication using NTN is that satellites in LEO are moving at high velocity, thereby causing the path distance for both the feeder link and the service link to change as a function of time. To solve this problem, it is assumed that the UE is equipped with a functionality that can provide the UE its geo-location (through GNSS - Global Navigation Satellite System - GPS, GloNass, Gallileo as examples of such systems). By the UE 120/122 knowing its own location, and subsequently providing the satellite's position in space it is possible for the UE 120/122 to calculate or estimate the impairments that are experienced for the service link. For the feeder link 204 the gNB 110 will in a similar way provide information that is descriptive of the time-variation. Such information may be known as Common TA related parameters and will be used by the UE 120/122 to perform additional pre-compensation of the impairments that are seen on the feeder link 204. The satellite location information may be obtained based on serving satellite ephemeris information.

There are different types of satellite orbits that have been studied for NR access including Low Earth Orbit (LEO) satellites 202 which orbit at approximately 600-1600 km above the earth. During the Rel-16 study item the typically beam footprint 208 of Figure 2 size for a LEO satellite was assumed to be between 100-1000 km radius. So, one LEO satellite can cover a very large area on the earth. In Rel-18, a topic of network verified UE location was introduced with the goal of the network being able to verify that the UE was at the location it is claiming to be with a certain accuracy. Goal of this is that the network that way is able to detect that the UE for instance is in a different country as its wrongly reported GNSS location indicates. For example, the RAN is to prioritize a specification for necessary enhancements to multi-RTT to support the network verified UE location in NTN assuming a single satellite in view. A multi-RTT is one of the methods to be studied and multiple satellites may be used but a single satellite is given higher priority, as there may only be one satellite visible to the UE. The use of multiple satellites likely will provide extra information which will speed up the estimation.

The multi-RTT determination utilizes both DL and UL messages. The UE receives configuration information from the LMF and serving gNB on the configurations for the positioning DL positioning reference signal (PRS) measurements and UL SRS configuration. The gNB transmits DL PRS and UE transmits UL SRS for positioning. The UE may measure UE RX-TX time difference per gNB and reports measurement results to LMF. Each gNB measures gNB Tx-Rx time difference and reports the same to the LMF. LMF then estimates RTT(s) to gNB(s) and finally UEs position. The UE and the gNB may additionally transmit assistance information to the LMF, as listed below.

The following list possible information elements transmitted from the UE to the LMF as assistance information:
- PCI, GCI, and PRS ID, ARFCN, PRS resource ID, PRS resource set ID for each measurement
- DL-PRS-RSRP measurement
- UE Rx-Tx time difference measurement
- Time stamp of the measurement
- Quality for each measurement
- TA offset used by UE
- UE Rx TEG IDs, UE Tx TEG IDs, and UE RxTx TEG IDs associated with UE Rx-Tx time difference measurements
- LOS/NLOS information for UE measurements
- DL-PRS-RSRPP measurement
- The association of UE Tx TEG ID and SRS

The following list possible information elements transmitted from the gNB to the LMF as assistance information:
- PCI, GCI, ARFCN and TRP IDs of the TRPs served by the gNB
- Timing information of TRPs served by the gNB
- DL-PRS configuration of the TRPs served by the gNB
- SSB information of the TRPs (the time/frequency occupancy of SSBs)
- Spatial direction information of the DL-PRS Resources of the TRPs served by the gNB
- Geographical coordinates information of the DL-PRS Resources of the TRPs served by the gNB
- TRP type
- On-demand DL-PRS information
- TRP Tx TEG association information
- UE SRS configuration
- SFN initialization time for the SRS configuration
- NCGI and TRP ID of the measurement
- gNB Rx-Tx time difference measurement
- UL-SRS-RSRP
- UL-SRS-RSRPP
- UL Angle of Arrival (azimuth and/or elevation)
   ∘ When used with UL-AoA for hybrid positioning.
- Multiple UL Angle of Arrival (azimuth and/or elevation)
   ∘ When used with UL-AoA for hybrid positioning.
- SRS Resource Type
   ∘ When used with UL-AoA for hybrid positioning.
- Time stamp of the measurement
- Quality for each measurement
- Beam Information of the measurement
- LoS/NLoS information for each measurement
- ARP ID of the measurement

The IE "UE Rx-Tx time difference measurement" (or in short UE Rx-Tx time difference, or UE Rx-Tx diff.) may be defined in current specifications as T_{UE-RX} - T_{UE-TX}, where T_{UE-RX} is the UE received timing of downlink subframe #x from a Transmission Point (TP), such as the gNB 110, defined by the first detected path in time, and T_{UE-TX} is the UE transmit timing of uplink subframe #j that is closest in time to the subframe #x received from the TP. A more detailed definition may be found from 3GPP standard specification 38.215.

The IE "gNB Tx-Rx time difference measurement" (or in short gNB Tx-Rx time difference, or gNB Tx-Rx diff.), also known as "gNB Rx-Tx time difference measurement", may be defined in current specifications as gNB Rx - Tx time difference is defined as T_{gNB-RX} - T_{gNB-TX}, where T_{gNB-RX} is the Transmission and Reception Point (TRP) received timing of uplink subframe #x containing SRS associated with UE, defined by the first detected path in time, and T_{gNB-TX} is the TRP transmit timing of downlink subframe #j that is closest in time to the subframe #x received from the UE. A more detailed definition may be found from 3GPP standard specifications

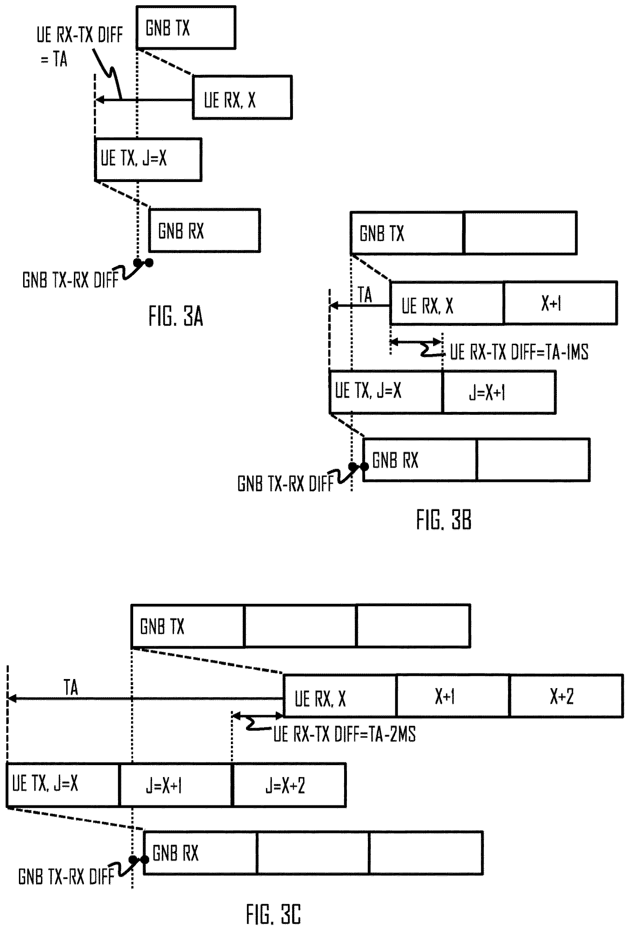

Let us look at timing issues with respect to Figures 3A-3C. For ease of illustration, Figures 3A-3C depict the UL subframe X being used for gNB RX-TX time difference measurement. In these Figures one subframe is 1 ms in duration.

When timing advance (TA) is small (TA<0.5 ms), then J=X in the UE Rx-Tx time difference definition above. In this case, UE Rx-Tx time difference is equal to the TA. This is illustrated in Figure 3A. The RTT can be calculated as RTT = (UE Rx-Tx time difference) + (gNB Rx-Tx time difference). For example, if we assume that gNB Tx happens at time 0, then UE Rx happens at RTT/2 and UE Tx happens at RTT/2-TA. From gNB point of view, gNB Tx happens at 0, GNB Rx happens at 0+RTT/2+RTT/2-TA. In Figure UE Rx-Tx difference is TA. GNB Tx-Rx difference RTT-TA. Then summing them gives TA+(RTT-TA)=RTT.

When 0.5 ms < TA < 1 ms, uplink subframe J=X+1 is closer to downlink subframe X. In this case, UE Rx-Tx time difference is negative and equal to (TA-1ms), that is the TX is delayed with 1 ms, so the UE Rx-TX becomes 1 ms less. This case is illustrated in Figure 3B. The RTT can be calculated as RTT = UE Rx-Tx time difference) + (gNB Rx-Tx time difference) + (1 ms).

When TA>1 ms, as will be typically the case in NTN, the existing UE RX-TX time difference measurement will grow further. This means that the possible range of values grows, so either more bits are needed or a lower accuracy will achieved for the report. As an example, consider Figure 3C where the TA is ~2.3 ms, J=X+2, UE Rx-Tx time difference = (TA - 2 ms) and RTT = (UE Rx-Tx time difference) + (gNB Rx-Tx time difference) + (2 ms).

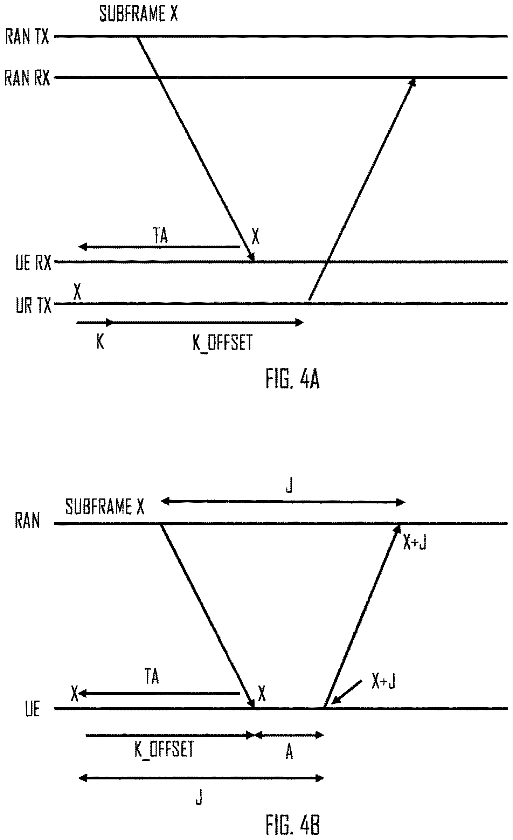

Figure 4A illustrates another piece of information called a K_offset. K_offset is an offset the UE applies to the scheduling commands in order to ensure causality. Normally the scheduling command delivered in DCI (downlink control information) is providing scheduling information for uplink transmissions in slot x+K, but as delays are larger in NTN the K_offset parameter (possibly configured by higher layers) is added to this. This is illustrated in Figure 4A, where a scheduled command is given for uplink slot x+K, where k is a rather low value. As the UE pulls slot x backwards by a timing advance (TA), slot x+K has passed when the UE received the UL scheduling command. Therefore, 3GPP has introduced the K offset to correct for the larger RTT (round trip time). K_offset is therefore a configured scheduling offset that is typically larger or equal to the sum of the service link RTT and the Common TA (representing the feeder link), and in order to keep delays as short as possible it should be set as close as possible to sum of the service link RTT and the common TA. K_offset may be cell-specific (provided via system information, SI) or UE-specific (provided via MAC control element, CE).

As shown with Figure 4A, the multi-RTT positioning method is based on DL and UL signal and time measurements. Both, UE and gNB measure their respective UE Rx-Tx or gNB Tx-Rx time difference (which can also be named gNB Rx-Tx time difference and these terms can be used interchangeably in the application) and report this information to the LMF. DL measurements are carried out using DL positioning reference signals (DL PRS), while UL measurements use sounding reference signals (UL SRS). The role of the UE is to first receive DL PRS and then send to the gNB UL SRS. The difference between these two corresponds to the UE Rx-Tx time difference that is reported to the LMF. The LMF may use it together with the gNB Tx-Rx time difference to estimate the RTT and, ultimately, provided sufficient samples with enough separation, the UE position. As was explained with respect to Figures 3A-3C, RTT is based on gNB Tx-Rx time difference and UE Rx-Tx time difference.

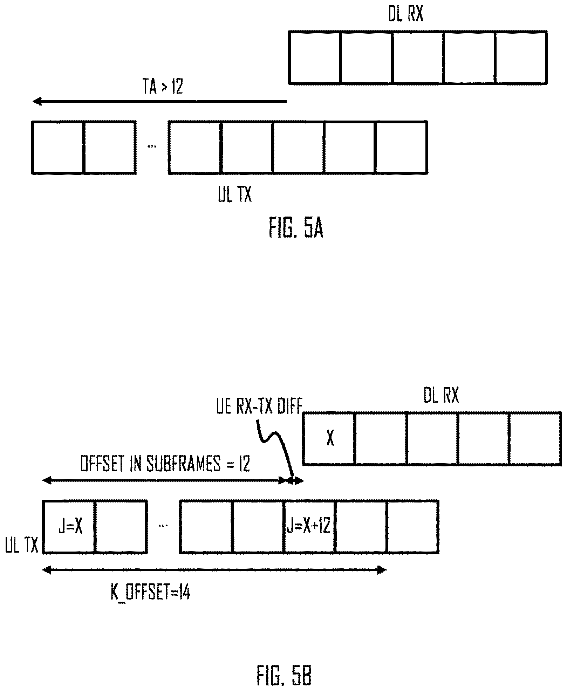

The definition of UE Rx-Tx time difference was written for terrestrial scenarios where propagation delays are much shorter and timing advance (TA) is typically shorter than 1 ms (i.e. less than one subframe). As shown in Figure 5, the current definition of UE Rx-Tx time difference requires enhancements to accommodate large delays and TA into the specification.

As such, there are some problems when taken to NTN, stemming from the issue that in NTN, the round-trip time (RTT) is significantly higher than the conventional RTT observed in terrestrial networks. Therefore, one multi-RTT loop may take significant more time to obtain a first measurement to be used in the estimation of UE location. Furthermore, in NTN, the UE positioning with only one satellite available requires multiple multi-RTT measurements, and long TA can result low accuracy as the range needs to be covered by the same number of bits for reporting or the overhead increases as the number of bits need to be increased.

The resolution of current multi-RTT report is given by integer of Tc (symbol time), and the report range is from -985024xTc to 985024xTc. This means that the report range supported in current specification only covers for [-0.5, 0.5] ms. Which is applicable for identifying the difference between the closest UL slot to the received DL slot. However, it is insufficient to resolve for the multiple possibilities of UL slot offset in NTN. As one solution, the reporting range could be increased while maintaining the number of bits, but such increase would lead to the resolution being worsened. This might lead to additional time required for accurate UE positioning, or the estimation accuracy failing to meet sufficiently high level.

To tackle these issues at least partially, there is proposed a solution for modifying the reporting of the UE Rx-Tx time difference. In some examples this can be performed by reusing K_offset in the reporting of the UE RX-TX time difference, to be able to provide an accurate provisioning of the time while not creating more overhead than needed. As such, in some embodiment, the UE reports the UE Rx-Tx time difference measurement corrected by the value of K_offset, e.g. K_offset is deducted.

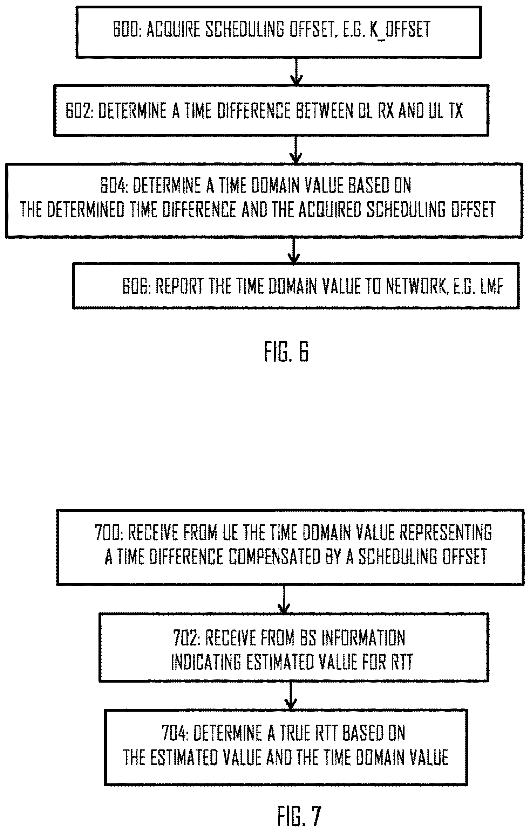

Figure 6 depicts an example method. The method may be computerimplemented. The method may be performed by a user equipment, such as UE 120. Accordingly, as shown in Figure 6, the UE 120 in step 600 acquires a scheduling offset value for communication between the UE and the gNB 110. In an embodiment this scheduling offset is K_offset. This may be received via system information, RRC or MAC signaling, for example. In an embodiment, the scheduling offset is NTN specific value and used in NTN communication but not in terrestrial networks.

In step 602, the UE 120 determines a time difference between a reception of a downlink message and transmission of an uplink message, wherein the uplink message is transmitted in response to the downlink message. The messages may be communicated from and to the gNB 110. As one example, such messages may be DL PRS and UL SRS for positioning, as discussed above. In an embodiment, this time difference corresponds to a timing advance (TA) value used at the time of receiving the DL message. In an embodiment, the TA is a sum of UE Rx-Tx difference and an offset in number of subframes (or other time domain window granularity). The UE may determine this time difference as the UE is aware of the Rx time of the DL message and is aware of the Tx time of the UL message, as well as the TA. The TA may be RRC signalled to the UE or MAC signalled, for example.

In step 604, the UE 120 determines a time domain value based on the determined time difference and the acquired scheduling offset, and in step 606 reports the time domain value to the network, such as to the LMF 118.

There are different embodiments how the UE determines the time difference and, consequently, the time domain value based on these two parameters.

In an embodiment for determining the time difference, illustrated in Figure 4B, the UE 120 may determine a TA value at the time of receiving the DL message, the TA being applicable for uplink communication between the UE and the gNB 110. As said, the TA (TA value) may be signalled to the UE 120. The TA is shown in Figure 4B as "TA", which the UE 120 uses to pull back the subframe X in which the UE 120 received the DL message. TA is determined by a number of factors: the UE can do the compensation itself (based on its position and the satellite ephemeris plus TA Common) or the UE receives a TA command from the network.

Then, the UE 120 determines the time difference at least partially based on the TA value. In one embodiment the time difference is or corresponds to the TA. Then, the time domain value (let's call this M) is determined by a subtraction operation between the TA value and the scheduling offset. In one example, this subtraction operation is TA minus K_offset, which results in M. After reporting the time domain value M to the LMF 118, the LMF 118 can then with the help of J (=gNB Tx-Rx time difference) and the reported time domain value M, calculate a value of A of Figure 4B, and with that deduct the pure RTT as actual RTT = J-A. IT is noted that the LMF 118 may receive J (=gNB TX-RX time difference) from the gNB as assistance information.

As an example of how A can be determined, let us again consider that gNB Tx happens at time 0, then UE Rx happens at RTT/2 and UE Tx happens at RTT/2-TA. From gNB point of view, gNB Rx happens at 0+RTT/2+RTT/2-TA. The UE Rx-Tx difference is TA plus some inaccuracy (which results in a large value to be reported without using the embodiments presented). Partly for this reason, a value TA-K_offset (let's call it M) is reported to the LMF. As explained above, gNB Tx-Rx difference (denoted as J above) is RTT-TA. When LMF has knowledge of both M and J, the LMF may A by summing as M+J=TA-K_offset+(RTT-TA)=RTT-K_offset, which is A in Figure 4B. Then, the actual RTT is J-A.

In another embodiment, for determining the time difference, which is illustrated in Figures 5A and 5B, the UE 120 detects a first path of the downlink message from the first network node at a downlink time window. As an example, the UE may detect the subframe when the UE receives the PRS from the gNB 110. Although the time window may be something else than subframe, such as slot, let us use in this embodiment the subframe granularity.

With respect to Figure 5A, let us imagine a scenario where the total timing advance will be - for example - above 12 ms. Then, the UE 120 may determine a first time period between the DL subframe and a first UL subframe that is closest in time to the DL subframe. This time period may thus correspond to UE Rx-Tx time difference definition. This is shown in Figure 5B.

The UE 120 may then determine a second time period as an integer number of subframes, the second time period being between the first UL subframe and a second UL subframe, wherein the second UL subframe is time advanced with respect to the first UL subframe. As such, the second time period may be seen as offset in subframes in Figure 4B, which is that example is 12. In other words, the UE 120 determines the offset in number of subframes from the first UL subframe that is closest in time and the UL subframe X that corresponds to the DL subframe X.

The UE 120 can then determine the time difference based on the first and second time periods. As an example, the time difference corresponds to a sum of the first and second time periods, and then the time domain value may determined by a subtraction operation between the time difference value and the scheduling offset. As an example, the subtraction operation may be as (UE Rx-Tx + Offset_in_subframes) - K_offset. The UE 120 may then report this value to the LMF 118. Now, instead of the UE reporting the Rx-Tx difference from the closest subframe (first time period) and the determined 12 subframes of offset (as the second time period), which is a rather large value, the UE deducts the K_offset before reporting, and reports a smaller value.

After reporting the time domain value to the LMF 118, the LMF 118 can then with the help of J (=gNB Tx-Rx time difference, see Figure 4B) and the reported time domain value, calculate a value of A of Figure 4B, and with that deduct the pure RTT as actual RTT = J-A.

It is noted that in terrestrial networks the UE might report only UE Rx-Tx, but in NTN, due to the large TA, the UE might report (UE Rx-Tx diff + offset_in_subframes), which basically corresponds to reporting TA. But owing to the embodiments presented herein (deduction of K_offset), the UE report a smaller value. As an example, assume the K_offset is 14 ms (=14 subframes). In this case the reported value would be (offset_in_subframes + UE Rx-Tx diff) - K_offset = (12ms + UE Rx-Tx diff) - 14 ms. Such approach may result in losing some granularity compared to legacy reporting of the large value, but this granularity may be in the order of a few meters for positioning, which is often acceptable.

As such, the embodiments apply a modified definition of UE Rx-Tx time difference (UE Rx-Tx difference, for short) as follows: the UE Rx is the UE received timing of downlink subframe #X from a transmission point (TP) defined by the first detected path, and the UE Tx is the UE transmit timing of uplink subframe #X+J that is closest in time to the downlink subframe #X, plus the duration of the "J" subframes between #X and #X+J.

Although above uses a position reference signal PRS) as the downlink message, and a sounding reference signal (SRS) for positioning the uplink message, these messages may be any pair of D L and UL messages.

As shown above, the indicated time domain value is useable at the second network node (e.g. LMF 118) for determining a true RTT corresponding to a communication link between the gNB 110 and the UE 120.

Due to utilizing any of the proposed embodiments which take into account the available information of K_offset, it is possible to reduce the amount of bits needed to indicate the slot offset between DL receptions and UL transmissions (at the UE side). Especially for the GEO scenario (with RTT in excess of 500 ms) the signaling overhead might otherwise become significant.

As an example, consider a GEO satellite where the satellite is in geostationary - or geosynchronous orbit around the earth, and causes the satellite to be even 36000 km from earth. This means that earth-satellite propagation time will be in the order of 120 ms, and the round-trip time (earth-satellite-earth(UE)-satellite-earth) may become in the order of 500 ms. This value roughly corresponds to the TA or to the UE Rx-Tx difference. If a UE has to report such value as UE Rx-Tx difference with slot/subframe granularity it may require even 9 bits (10 bits if we consider the case of 540 ms RTT). However, the value of K_offset to some extend describes a part of the RTT (e.g. K_offset should be larger than the expected RTT to ensure the causality of the system), this parameter K_offset can be utilized before the reporting. For example, let us consider a case where TA (expected for the cell) = 480-484 ms and K_offset = 485 ms. Owing to the embodiments presented herein, where signaling only the difference between K_offset and TA is targeted, the reported value is the difference, which in this case becomes: 485 - [480-484] = [5-1]. This can be reported using e.g. 3 bits (compared to the 9 or 10 bits that would otherwise be considered). As such, one benefit of the embodiments is that the embodiments allow the UE to report with further fine granularity while keeping reporting payload (use of bits) the same.

In one embodiment, the network may configure the UL reporting range to a low amount of bits (e.g. 3 bits), which allows for indicating a slot offset (on top of the K_offset) of 0-7, In such a case the gNB may further configure the UE to perform "wrap-around" of the indicated value and still be able to know which slot offset would be considered the actual reported value. The reason for having this knowledge is two-fold. First, the UE may have already provided its (rough) location/position for obtaining service in the first place (and hence the UE location verification procedure is running), and secondly, the gNB would have knowledge of the satellite's position as well as the coverage area of the cell and hence know which RTT values (and K_offset values) are to be considered/expected.

In an embodiment, the time domain value is represented by a bit combination. In one embodiment of the invention the network may configure the UL reporting range to a low amount of bits (e.g. 3 bits), which allows for indicating a slot offset (on top of the K_offset) of 0-7.

In yet one embodiment, the LMF 118 may further configure the UE to perform "wrap-around" of the indicated value and still be able to know which slot offset would be considered the actual reported value. In an embodiment, the UE thus receives an indication to perform a modulo operation for the time domain value before reporting, when the time domain value is larger than a predetermined threshold. The predetermined threshold may be configured/signalled by the network to the UE. The predetermined threshold may depend on the satellite position. The reasons for enabling such module/wrap around operation may be as follows. First, the UE may have already provided its (rough) location/position for obtaining service in the first place (and hence the UE location verification procedure is running), and secondly, the gNB would have knowledge of the satellite's position as well as the coverage area of the cell and hence know which RTT values (and K_offset values) are to be considered/expected.

Figure 7 depicts an example method. The method may be computerimplemented. The method may be performed by a core network entity, such as the LMF 118. Accordingly, as shown in Figure 7, the LMF 118 in step 700 receives from the UE 120 the time domain value representing a time difference compensated by the scheduling offset. In step 702, the LMF 118 receives from the gNB 110 information indicating an estimated value for a round trip time corresponding to a communication link between the UE 120 and the gNB 110. This information may comprise any of the IEs in the above bulleted list, such as gNB Rx-Tx time difference measurement. As the gNB Rx-Tx time difference includes also the UE Rx-Tx time difference it can be seen as only an approximation of the true RTT. Then the LMF 118 may in step 704 determine a true RTT for the communication link based on the estimated value and the time domain value, as has been described above. The LMF 118 may apply the true RTT for position estimation of the UE 120, for example.

In one embodiment, the gNB 110 may communicate the value of K_offset to the LMF 118, or the gNB 110 may take K_offset into account in the information it sends to the LMF as assistance information.

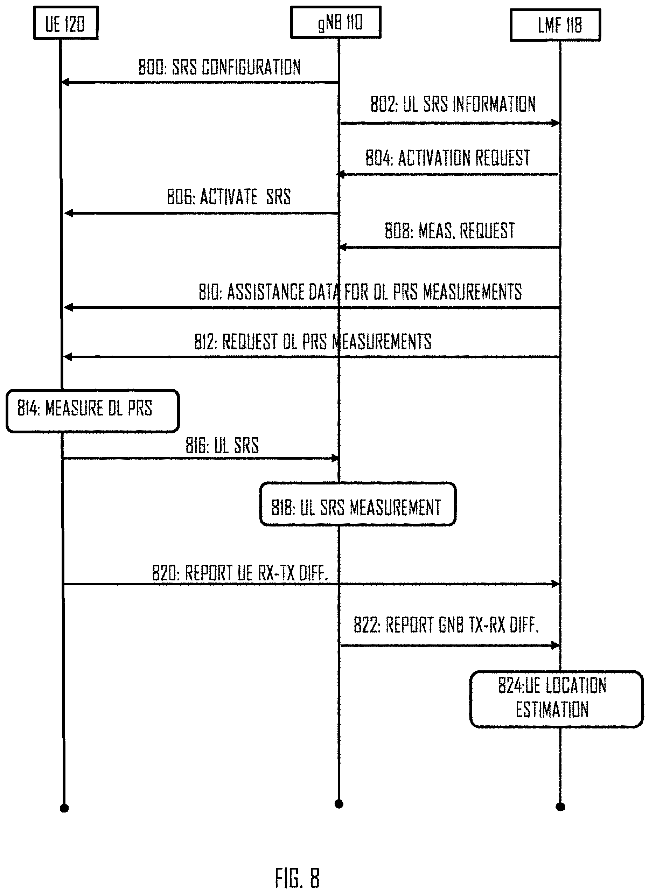

Figure 8 provides a signaling flow diagram for UE location estimation. In step 800, the gNB 110 configures SRS configuration to the UE 120, and provides in step 802 SRS information to the LMF 118. The LMF 118 in step 804 sends activation request to the gNB 110 who consequently in step 806 activates SRS for positioning at the UE 110. In step 808 the gNB 110 receives a measurement request from the LMF 118. In steps 810 and 812 the LMF 118 sends assistance data to the UE 110 for DL PRS measurements and request the UE to perform such measurements, respectively. In step 814, the UE measures the DL PRS and then transmits UL SRS in step 816 to be measured by the gNB 110 in step 818. In steps 820, the UE reports the UE Rx-Tx time diff. to the LMF. As explained, owing to the embodiments presented above, this reporting is modified so that a smaller value can be reported. In step 822, the gNB 110 reports gNB Tx-Rx time difference to the LMF 118. Finally, in step 824, the LMF 118 may perform location estimation of the UE at least partially based on the reported values in steps 820 and 822.

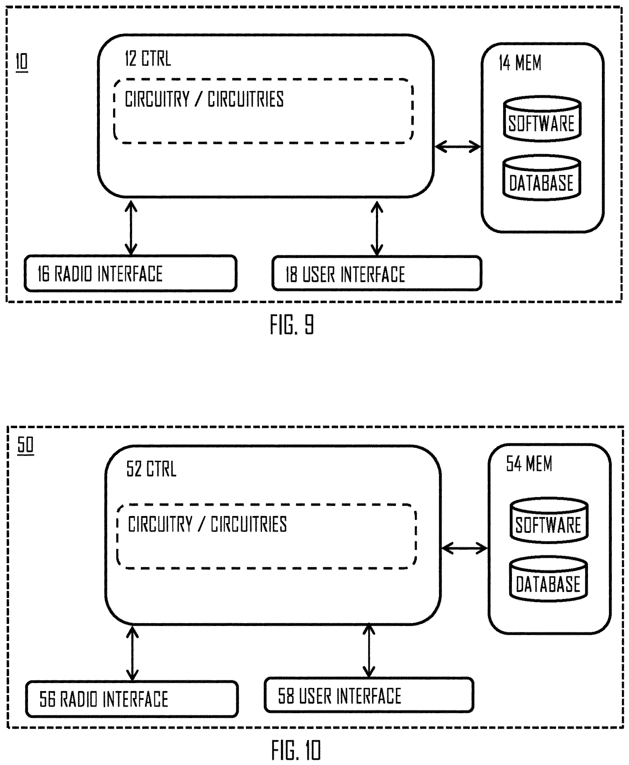

An embodiment, as shown in Figure 9, provides an apparatus 10 comprising a control circuitry (CTRL) 12, such as at least one processor, and at least one memory 14 storing instructions that, when executed by the at least one processor, cause the apparatus at least to carry out any one of the above-described processes. In an example, the at least one memory and the computer program code (software), are configured, with the at least one processor, to cause the apparatus to carry out any one of the above-described processes. The memory may be implemented using any suitable data storage technology, such as semiconductorbased memory devices, flash memory, magnetic memory devices and systems, optical memory devices and systems, fixed memory and removable memory. The memory may comprise a database for storing data.

In an embodiment, the apparatus 10 may comprise the terminal device of a communication system, e.g. a user terminal (UT), a computer (PC), a laptop, a tabloid computer, a cellular phone, a mobile phone, a communicator, a smart phone, a palm computer, a mobile transportation apparatus (such as a car), a household appliance, or any other communication apparatus, commonly called as UE in the description. Alternatively, the apparatus is comprised in such a terminal device. Further, the apparatus may be or comprise a module (to be attached to the UE) providing connectivity, such as a plug-in unit, an "USB dongle", or any other kind of unit. The unit may be installed either inside the UE or attached to the UE with a connector or even wirelessly.

In an embodiment, the apparatus 10 is or is comprised in the UE 120. The apparatus may be caused to execute some of the functionalities of the above described processes, such as the steps of Figure 6.

The apparatus may further comprise a radio interface (TRX) 16 comprising hardware and/or software for realizing communication connectivity according to one or more communication protocols. The TRX may provide the apparatus with communication capabilities to access the radio access network, for example. The apparatus may also comprise a user interface 18 comprising, for example, at least one keypad, a microphone, a touch display, a display, a speaker, etc. The user interface may be used to control the apparatus by the user. The control circuitry 12 may comprise relevant circuitry/ies for performing the functions, according to any of the embodiments.

An embodiment, as shown in Figure 10, provides an apparatus 50 comprising a control circuitry (CTRL) 52, such as at least one processor, and at least one memory 54 storing instructions that, when executed by the at least one processor, cause the apparatus at least to carry out any one of the above-described processes. In an example, the at least one memory and the computer program code (software), are configured, with the at least one processor, to cause the apparatus to carry out any one of the above-described processes. The memory may be implemented using any suitable data storage technology, such as semiconductorbased memory devices, flash memory, magnetic memory devices and systems, optical memory devices and systems, fixed memory and removable memory. The memory may comprise a database for storing data.

In an embodiment, the apparatus 50 may be or be comprised in a network node, such as in LMF of 5G. In an embodiment, the apparatus is or is comprised in the network node 118. The apparatus may be caused to execute some of the functionalities of the above described processes, such as the steps of Figure 7.

The apparatus may further comprise communication interface (TRX) 56 comprising hardware and/or software for realizing communication connectivity according to one or more communication protocols. The TRX may provide the apparatus with communication capabilities to operate in the radio access network, for example. The apparatus may also comprise a user interface 58 comprising, for example, at least one keypad, a microphone, a touch display, a display, a speaker, etc. The user interface may be used to control the apparatus by the user. The control circuitry 52 may comprise relevant circuitry/ies for performing the functions, according to any of the embodiments.

In an embodiment, an apparatus carrying out at least some of the embodiments described comprises at least one processor and at least one memory including a computer program code, wherein the at least one memory and the computer program code are configured, with the at least one processor, to cause the apparatus to carry out the functionalities according to any one of the embodiments described. According to an aspect, when the at least one processor executes the computer program code, the computer program code causes the apparatus to carry out the functionalities according to any one of the embodiments described. According to another embodiment, the apparatus carrying out at least some of the embodiments comprises the at least one processor and at least one memory including a computer program code, wherein the at least one processor and the computer program code perform at least some of the functionalities according to any one of the embodiments described. Accordingly, the at least one processor, the memory, and the computer program code form processing means for carrying out at least some of the embodiments described. According to yet another embodiment, the apparatus carrying out at least some of the embodiments comprises a circuitry including at least one processor and at least one memory including computer program code. When activated, the circuitry causes the apparatus to perform the at least some of the functionalities according to any one of the embodiments described.

As used in this application, the term 'circuitry' refers to all of the following: (a) hardware-only circuit implementations, such as implementations in only analog and/or digital circuitry, and (b) combinations of circuits and soft-ware (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

In an embodiment, at least some of the processes described may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry.

A term non-transitory, as used herein, is a limitation of the medium itself (i.e. tangible, not a signal) as opposed to a limitation on data storage persistency (e.g. RAM vs. ROM).

As used herein the term "means" is to be construed in singular form, i.e. referring to a single element, or in plural form, i.e. referring to a combination of single elements. Therefore, terminology "means for [performing A, B, C]", is to be interpreted to cover an apparatus in which there is only one means for performing A, B and C, or where there are separate means for performing A, B and C, or partially or fully overlapping means for performing A, B, C. Further, terminology "means for performing A, means for performing B, means for performing C" is to be interpreted to cover an apparatus in which there is only one means for performing A, B and C, or where there are separate means for performing A, B and C, or partially or fully overlapping means for performing A, B, C.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. For firmware or software, the implementation can be carried out through modules of at least one chip set (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments as described may also be carried out in the form of a computer process defined by a computer program or portions thereof. Embodiments of the methods described may be carried out by executing at least one portion of a computer program comprising corresponding instructions. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. Coding of software for carrying out the embodiments as shown and described is well within the scope of a person of ordinary skill in the art.

Following is a list of some aspects of the invention.

According to a first aspect, there is provided a method performed by a user equipment configured to operate in a non-terrestrial network, the method comprising: acquiring a scheduling offset value for communication between the apparatus and a first network node; determining a time difference between a reception of a downlink message and transmission of an uplink message, wherein the uplink message is transmitted in response to the downlink message; determining a time domain value based on the determined time difference and the acquired scheduling offset; and reporting the time domain value to a second network entity.

Various embodiments of the first aspect may comprise at least one feature from the following bulleted list:
- wherein determining the time difference comprises: determining a timing advance value at the time of receiving the downlink message, the timing advance being applicable for uplink communication between the apparatus and the first network node; and determining the time difference at least partially based on the timing advance value.
- wherein the time difference corresponds to the timing advance and the time domain value is determined by a subtraction operation between the timing advance value and the scheduling offset.
- wherein determining the time difference comprises: detecting a first path of the downlink message from the first network node at a downlink time window; determining a first time period between the downlink time window and a first uplink time window that is closest in time to the downlink time window; determining a second time period as an integer number of time windows, the second time period being between the first uplink time window and a second uplink time window, wherein the second uplink time window is time advanced with respect to the first uplink time window; determining the time difference based on the first and second time periods.
- wherein the time difference corresponds to a sum of the first and second time periods, and the time domain value is determined by a subtraction operation between the time difference value and the scheduling offset.
- wherein the duration of the downlink time window and the duration of the uplink time window is a subframe or a slot.
- wherein the downlink message is a position reference signal and the uplink message is a sounding reference signal for positioning.
- wherein the indicated time domain value is useable at the second network node for determining a round trip time corresponding to a communication link between the apparatus and the first network node.
- receiving an indication to perform a modulo operation for the time domain value before reporting, when the time domain value is larger than a predetermined threshold.

According to a second aspect, there is provided a method performed by a location management function entity configured to operate in a non-terrestrial network, the method comprising: receiving from a user equipment a time domain value representing a time difference compensated by a scheduling offset, wherein the time difference is between a reception of a downlink message and transmission of an uplink message at the user equipment, wherein the uplink message is transmitted in response to the downlink message; receiving from a base station information indicating an estimated value for a round trip time corresponding to a communication link between the user equipment and the base station; and determining a true round trip time for the communication link based on the estimated value and the time domain value.

Various embodiments of the second aspect may comprise at least one feature from the following bulleted list:
- wherein the determination comprises subtracting the time domain value from the estimated value.
- apply the true round trip time for position estimation of the user equipment.

According to a third aspect, there is provided an apparatus configured to operate in a non-terrestrial network, the apparatus comprising: at least one processor; and at least one memory storing instructions that, when executed by the at least one processor, cause the apparatus at least to: acquire a scheduling offset value for communication between the apparatus and a first network node; determine a time difference between a reception of a downlink message and transmission of an uplink message, wherein the uplink message is transmitted in response to the downlink message; determine a time domain value based on the determined time difference and the acquired scheduling offset; and report the time domain value to a second network entity. Various embodiments of the third aspect may comprise at least one feature from the bulleted list under the first aspect.

According to a fourth aspect, there is provided an apparatus configured to operate in a non-terrestrial network, the apparatus comprising: at least one processor; and at least one memory storing instructions that, when executed by the at least one processor, cause the apparatus at least to: receive from a user equipment a time domain value representing a time difference compensated by a scheduling offset, wherein the time difference is between a reception of a downlink message and transmission of an uplink message at the user equipment, wherein the uplink message is transmitted in response to the downlink message; receive from a base station information indicating an estimated value for a round trip time corresponding to a communication link between the user equipment and the base station; and determine a true round trip time for the communication link based on the estimated value and the time domain value. Various embodiments of the fourth aspect may comprise at least one feature from the bulleted list under the second aspect.

According to a fifth aspect, there is provided a computer program product embodied on a distribution medium and comprising program instructions which, when executed by an apparatus, cause the apparatus to carry out the method according to the first aspect.

According to a sixth aspect, there is provided a computer program product embodied on a distribution medium and comprising program instructions which, when executed by an apparatus, cause the apparatus to carry out the method according to the second aspect.

According to a seventh aspect, there is provided a computer program product comprising program instructions which, when executed by an apparatus, cause the apparatus to carry out the method according to the first aspect.

According to an eight aspect, there is provided a computer program product comprising program instructions which, when executed by an apparatus, cause the apparatus to carry out the method according to the second aspect.

According to a ninth aspect, there is provided an apparatus, comprising means for performing the method according to the first aspect, and/or means configured to cause the apparatus to perform the method according to the first aspect.

According to a tenth aspect, there is provided an apparatus, comprising means for performing the method according to the second aspect, and/or means configured to cause the apparatus to perform the method according to the second aspect.

According to an eleventh aspect, there is provided computer implemented system, comprising: a server and at least one radio node; and at least one processor and at least one memory storing instructions that, when executed by the at least one processor, cause the system at least to carry out the method according to the first aspect and/or the method according to the second aspect.

According to a twelfth aspect, there is provided computer implemented system, comprising: one or more processors; at least one data storage, and one or more computer program instructions to be executed by the one or more processors in association with the at least one data storage for carrying out the method according to the first aspect and/or the method according to the second aspect.

Even though the invention has been described above with reference to an example according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. An apparatus configured to operate in a non-terrestrial network, the apparatus comprising:
at least one processor; and
at least one memory storing instructions that, when executed by the at least one processor, cause the apparatus at least to:
acquire a scheduling offset value for communication between the apparatus and a first network node;
determine a time difference between a reception of a downlink message and transmission of an uplink message, wherein the uplink message is transmitted in response to the downlink message;
determine a time domain value based on the determined time difference and the acquired scheduling offset; and
report the time domain value to a second network entity.

2. The apparatus of claim 1, wherein, for determining the time difference, the apparatus is further caused to:
determine a timing advance value at the time of receiving the downlink message, the timing advance being applicable for uplink communication between the apparatus and the first network node; and
determine the time difference at least partially based on the timing advance value.

3. The apparatus of clam 2, wherein the time difference corresponds to the timing advance and the time domain value is determined by a subtraction operation between the timing advance value and the scheduling offset.

4. The apparatus of claim 1, wherein, for determining the time difference, the apparatus is further caused to:
detect a first path of the downlink message from the first network node at a downlink time window;
determine a first time period between the downlink time window and a first uplink time window that is closest in time to the downlink time window;
determine a second time period as an integer number of time windows, the second time period being between the first uplink time window and a second uplink time window, wherein the second uplink time window is time advanced with respect to the first uplink time window; and
determine the time difference based on the first and second time periods.

5. The apparatus of claim 4, wherein the time difference corresponds to a sum of the first and second time periods, and the time domain value is determined by a subtraction operation between the time difference value and the scheduling offset.

6. The apparatus of any of claims 4 to 5, wherein the duration of the downlink time window and the duration of the uplink time window is a subframe or a slot.

7. The apparatus of any of claims 1 to 6, wherein the downlink message is a position reference signal and the uplink message is a sounding reference signal for positioning.

8. The apparatus of any of claims 1 to 7, wherein the apparatus is further caused to:
receive an indication to perform a modulo operation for the time domain value before reporting, when the time domain value is larger than a predetermined threshold.

9. The apparatus of any of claims 1 to 8, wherein the apparatus is or is comprised in a user equipment, the first network node is a base station and the second network node is a location management function entity.

10. An apparatus configured to operate in a non-terrestrial network, the apparatus comprising:
at least one processor; and
at least one memory storing instructions that, when executed by the at least one processor, cause the apparatus at least to:
receive from a user equipment a time domain value representing a time difference compensated by a scheduling offset, wherein the time difference is between a reception of a downlink message and transmission of an uplink message at the user equipment, wherein the uplink message is transmitted in response to the downlink message;
receive from a base station information indicating an estimated value for a round trip time corresponding to a communication link between the user equipment and the base station; and
determine a true round trip time for the communication link based on the estimated value and the time domain value.

11. The apparatus of claim 10, wherein the apparatus is or is comprised in a location management function entity.

12. A method performed by a user equipment configured to operate in a non-terrestrial network, the method comprising:
acquiring a scheduling offset value for communication between the user equipment and a first network node;
determining a time difference between a reception of a downlink message and transmission of an uplink message, wherein the uplink message is transmitted in response to the downlink message;
determining a time domain value based on the determined time difference and the acquired scheduling offset; and
reporting the time domain value to a second network entity.

13. A method performed by a location management function entity configured to operate in a non-terrestrial network, the method comprising:
receiving from a user equipment a time domain value representing a time difference compensated by a scheduling offset, wherein the time difference is between a reception of a downlink message and transmission of an uplink message at the user equipment, wherein the uplink message is transmitted in response to the downlink message;
receiving from a base station information indicating an estimated value for a round trip time corresponding to a communication link between the user equipment and the base station; and
determining a true round trip time for the communication link based on the estimated value and the time domain value.

14. A computer program product embodied on a distribution medium readable by a computer and comprising program instructions which, when the program is executed by an apparatus, cause the apparatus to carry out the method according to claim 12 or 13.
